## Europäisches Patentamt

## European Patent Office

## Office européen des brevets

(19)

(11) Veröffentlichungsnummer : **0 135 959**
**B1**

(12)                            EUROPÄISCHE PATENTSCHRIFT

(45) Veröffentlichungstag der Patentschrift :
20.01.88

(51) Int. Cl.⁴ : **G 05 B 19/19**, B 29 C 45/80

(21) Anmeldenummer : 84201236.1

(22) Anmeldetag : 28.08.84

(54) Einrichtung zur Steuerung eines Antriebes für die Bewegung von Werkzeugen, insbesondere von Formteilen einer Spritzgussmaschine.

(30) Priorität : 02.09.83 DE 3331648

(43) Veröffentlichungstag der Anmeldung :
03.04.85 Patentblatt 85/14

(45) Bekanntmachung des Hinweises auf die Patenterteilung : 20.01.88 Patentblatt 88/03

(84) Benannte Vertragsstaaten :
DE FR GB IT

(56) Entgegenhaltungen :
EP-A- 0 066 682
DE-A- 2 922 501
DE-B- 2 348 704
FR-A- 2 424 658
REGELUNGSTECHNISCHE PRAXIS, 23. Jahrgang,
Heft 12, 1981, München D. AHRENS, H. GÜNTHER
"Verfahren der Positionierung und Lageregelung"
Seiten 428-436

(73) Patentinhaber : **Philips Patentverwaltung GmbH**
**Wendenstrasse 35 Postfach 10 51 49**
**D-2000 Hamburg 1 (DE)**
**DE**
**N.V. Philips' Gloeilampenfabrieken**
**Groenewoudseweg 1**
**NL-5621 BA Eindhoven (NL)**
**FR GB IT**

(72) Erfinder : **Langlois, Jaques**
**Adam Riese Strasse 2**
**D-3502 Vellmar (DE)**
Erfinder : **Liebetraut, Klaus**
**Schossäckerstrasse 7**
**D-3500 Kassel (DE)**

(74) Vertreter : **Auer, Horst, Dipl.-Ing. et al**
**Philips Patentverwaltung GmbH Wendenstrasse 35**
**Postfach 10 51 49**
**D-2000 Hamburg 1 (DE)**

**Beschreibung**

Die Einrichtung bezieht sich auf eine Einrichtung zur Steuerung eines Antriebes für die Bewegung von Werkzeugen, insbesondere von Formteilen einer Kunststoff-Spritzgußmaschine, mit einem einen Positionswert liefernden, die Werkzeugbewegung wegabhängig erfassenden Istwegaufnehmer, mit einer Sollwegvorgabe, durch die zunächst die gesamte, dem Bewegungshub des Werkzeuges entsprechende Wegstrecke vorgegeben wird und einem Rechenglied, das abhängig von dem in der Sollwegvorgabe erzeugten Signal einen der maximalen Bewegungsgeschwindigkeit entsprechenden Wert erzeugt, aus dem bei Bewegung des Werkzeuges ein Nachsteuersignal für die Sollwegvorgabe und aus dem die Stellgröße für den Antrieb abgeleitet wird.

Aus der DE-OS 23 24 839 ist eine Einrichtung zur Steuerung eines Antriebes für die Bewegung von Werkzeugen, insbesondere von Formteilen einer Kunststoff-Spritzgußmaschine bekannt, die beim Öffnen und Schließen der Form die Istgeschwindigkeit der beweglichen Formteile mißt und einer einstellbaren Sollgeschwindigkeit angleicht. Beim Schließen der Form bewegen sich die Formteile mit einer konstanten Geschwindigkeit aufeinander zu, bis ein vorgebbarer Schließdruck erreicht ist. Der dadurch verursachte Aufschlag der Formteile führt zu unerwünschten Prellungen. Diese Prellungen verzögern das Schließen und erhöhen den Verschleiß.

Die eingangs erwähnte Einrichtung ist aus der EP-A-0 066 682 bekannt, die zum Steuern eines Antriebes für die Bewegung von Maschinenbauteilen unter Verwendung eines die Bewegung wegabhängig erfassenden Istwegaufnehmers dient. Der Istwegaufnehmer liefert einen Positionswert an ein als Digitalrechner ausgebildetes Rechenglied, das noch von einer Eingabevorrichtung einen Lagesollwert erhält. Das Rechenglied bildet ein Verschiebegeschwindigkeitssignal, das einerseits zur Nachsteuerung und andererseits zur Erzeugung einer Stellgröße für den Antrieb dient.

Des weiteren ist aus der Druckschrift « Reglungstechnische Praxis », 23. Jahrgang, Heft 12, 1981, eine lineare Lageregelung bekannt, bei der ein vorgegebener Lagesollwert, der dem gesamten Bewegungshub des Werkzeuges entspricht, mit dem Positionswert eines Istwegaufnehmers verglichen und eine Stellgröße daraus gebildet wird. Auch ist es hieraus bekannt, ein Wegsignal durch Integration des Geschwindigkeitssignales zu erzeugen.

Bei beiden Einrichtungen nach den zuletzt genannten Entgegenhaltungen kann es bei hohen Geschwindigkeiten des Werkzeuges zur Zerstörung komplizierter Maschinenbauteile bzw. Kunststoffteile kommen.

Aufgabe der vorliegenden Erfindung ist es, eine Einrichtung zur Steuerung eines Antriebes zu schaffen, durch die Werkzeuge, insbesondere Formteile einer Kunststoff-Spritzgußmaschine, in kurzer Zeit in die gewünschte Position, z. B. eine Schließposition, stoß- und ruckfrei bis zum Stillstand in der vorgebbaren Endposition gebracht werden und dabei eine Zerstörung von Maschinenbauteilen bzw. Spritzgußteilen durch hohe Geschwindigkeiten vermieden wird.

Diese Aufgabe wird bei einer Einrichtung eingangs genannter Art dadurch gelöst, daß zusätzlich eine vorgebbare Verzögerung zur Erreichung des Stillstandes des Werkzeuges bei einer Endposition dem Rechenglied zugeführt wird, dessen Ausgangssignal an einen Geschwindigkeitsregelkreis geliefert wird, der eine Reihenschaltung aus einem vom Rechenglied angesteuerten Regelverstärker und einem Integrierglied aufweist, das einerseits über eine Rückkopplungsschleife an den Regelverstärker und andererseits an einen eine Sollposition ermittelnden Integrator ein Sollgeschwindigkeitssignal liefert, daß die Stellgröße aus dem Vergleich zwischen Positionswert und Sollposition bestimmt wird und daß ein mit der Rückkopplungsschleife gekoppelter Geschwindigkeitsbegrenzer, der ein vom Regelverstärker dem Integrierglied geliefertes Beschleunigungssignal auf Null setzt, wenn die Sollgeschwindigkeit eine dem Geschwindigkeitsbegrenzer vorgebbare Maximalgeschwindigkeit erreicht.

Bei dieser Einrichtung wird aus einer vorgebbaren, dem Bewegungshub entsprechenden Wegstrecke und einer einstellbaren Verzögerung ein wegabhängiges Geschwindigkeitsprofil ermittelt, das gegen Ende des Bewegungshubes gegen Null geht. Das Rechenglied ermittelt hierbei in jedem Augenblick die Bewegungsgeschwindigkeit, die das Werkzeug nicht überschreiten darf, damit die vom Antrieb bzw. einer zugehörigen Bremseinrichtung aufbringbare Bremskraft aus reicht, um das Werkzeug bis zum Stillstand bei seiner vorgegebenen Endposition abzubremsen. Da die Verzögerung wählbar ist, kann die Steuerungseinrichtung mit unterschiedlich dimensionierten Bremseinrichtungen verwendet werden. Der Geschwindigkeitsregelkreis bewirkt, daß das Werkzeug vom Stillstand aus ruckfrei beschleunigt wird. Mittels des Geschwindigkeitsbegrenzers wird eine Beschädigung komplizierter Spritzteile beim Öffnen der Spritzgußform vermieden, da die Geschwindigkeit der beweglichen Formteile begrenzbar ist.

In Ausgestaltung der Erfindung wird das in der Sollwegvorgabe erzeugte Signal durch Vergleich der Sollposition mit dem dem Bewegungshub entsprechenden Wert ermittelt.

In Ausgestaltung der Erfindung ist der Geschwindigkeitsbegrenzer als Operationsverstärker ausgebildet, der die Maximalgeschwindigkeit mit der Sollgeschwindigkeit vergleicht. Der erfindungsgemäße Geschwindigkeitsbegrenzer ist einfach konstruiert, so daß er preiswert herstellbar ist und zuverlässig funktioniert.

Eine vorteilhafte Ausgestaltung der Erfindung ist gekennzeichnet durch mindestens ein Element zur Begrenzung des Beschleunigungssignales auf einen vorgebbaren Pegel, bestehend aus einem Differenzverstärker, dessen invertierender Eingang einerseits über eine Rückkopplungsdiode mit dem Differenzverstärkerausgang und andererseits mit dem Eingang des Integriergliedes verbunden ist und dessen nichtinvertierender Eingang von einem dem vorgebbaren Pegel des Beschleunigungssignales entsprechenden Signal angesteuert wird. Durch die Begrenzung der Beschleunigung wird der Energieverbrauch gesenkt und die Belastung des z. B. hydraulischen Antriebesaggregates herabgesetzt.

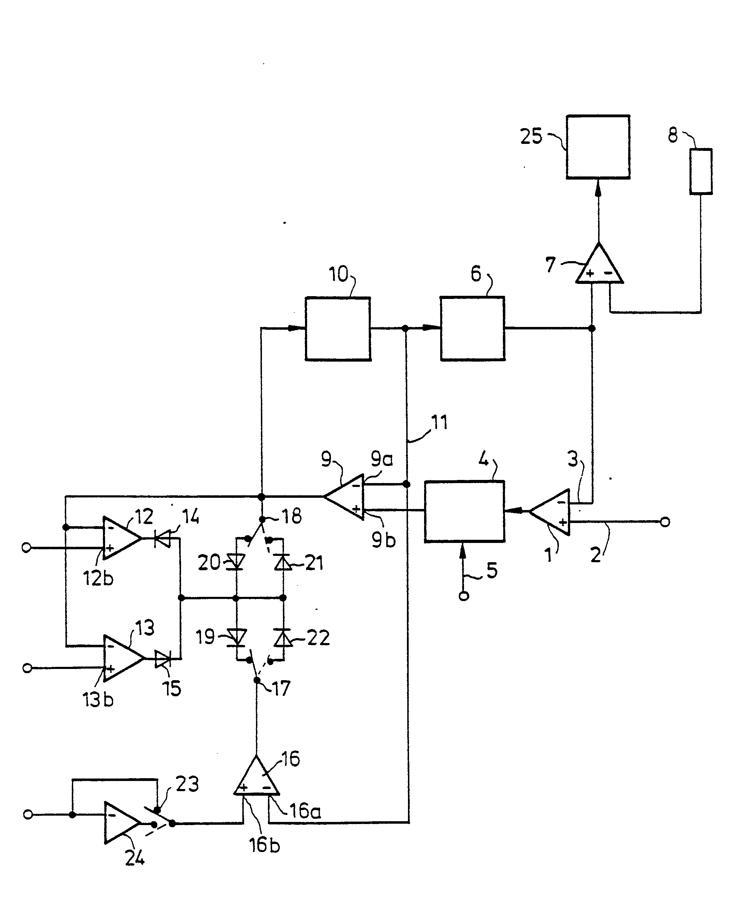

Anhand der Zeichnung wird ein Ausführungsbeispiel der Erfindung beschrieben und dessen Wirkungsweise erläutert.

Die Figur zeigt in schematischer Darstellung eine Ausführungsform einer Einrichtung zur Steuerung eines Antriebes für die Bewegung von Werkzeugen nach der Erfindung.

Eine in der Figur dargestellte, als Operationsverstärker 1 ausgebildete Sollwegvorgabe wird über den nichtinvertierenden Eingang 2 die dem gesamten Bewegungshub des Werkzeuges entsprechende Wegstrecke und über den invertierenden Eingang 3 die Sollposition zugeführt. Die Sollwegvorgabe steuert mit der Differenz aus Bewegungshub (Z) und Sollposition (W) das Rechenglied 4 an, dem über einen Steuereingang 5 ein der Verzögerung (B) der Werkzeugbewegung entsprechender Wert eingegeben werden kann. Das Rechenglied 4 errechnet daraus die maximale Bewegungsgeschwindigkeit (V), die das Werkzeug erreichen darf, um bei vorgegebener Verzögerung ruckfrei bis zum Stillstand abbremsen zu können, anhand der Beziehung

$$V = \text{sign } (Z - W) |\sqrt{2 B | (Z - W)|}|$$

Dem Rechenglied 4 ist ein Regelverstärker 9 und ein Integrierglied 10 nachgeschaltet. Das Integrierglied 10 erzeugt aus einem vom Regelverstärker 9 gebildeten Beschleunigungssignal ein Sollgeschwindigkeitssignal, das einerseits über eine Rückkopplungsschleife 11 dem Regelverstärker 9 und andererseits einem Integrator 6 zur Erzeugung des Sollposition zugeführt wird.

Die Sollposition wird im nichtinvertierenden Eingang eines beispielsweise als Operationsverstärker ausgebildeten Vergleichers 7 zugeführt, über dessen invertierenden Eingang der von einem Istwegaufnehmer 8 erfaßte Positionswert des Werkzeuges eingegeben wird. Die vom Vergleicher 7 errechnete Differenz aus Sollposition und Positionswert ergibt eine Stellgröße, die dem Stellantrieb 25 eines Servo-Ventils für den hydraulischen Antrieb eines beweglichen Spritzgußformteiles zugeführt werden kann.

Das über den nichtinvertierenden Eingang 2 dem Operationsverstärker 1 zugeführte und dem gesamten Bewegungshub entsprechende Signal hat die Form einer positiven Sprungfunktion.

Da die Sollposition des Werkzeuges bei Beginn einer Werkzeugbewegung zunächst noch Null ist, haben auch die dem Rechenglied 4 zugeführte Differenz aus Sollposition und Bewegungshub und die vom Rechenglied 4 ermittelte Bewegungsgeschwindigkeit die Form einer Sprungfunktion. Da das vom Integrierglied 10 über die Rückkopplungsschleife 11 auf den invertierenden Eingang 9a des Regelverstärkers 9 rückgekoppelte Sollgeschwindigkeitssignal zunächst Null ist, nimmt das vom Regelverstärker 9 aus der Differenz zwischen Sollgeschwindigkeit und Bewegungsgeschwindigkeit ermittelte Beschleunigungssignal einen hohen Wert an. Das Integrierglied 10 erzeugt daraus die Sollgeschwindigkeit, die von einem Nullwert ausgehend stetig zunimmt. Damit nimmt auch die vom Integrator 6 erzeugte Sollposition stetig zu.

Die Differenz aus Bewegungshub und Sollposition, die der vom Werkzeug noch zurückzulegenden Wegstrecke entspricht, nimmt ab, so daß auch die vom Rechenglied 4 aus dieser Differenz ermittelte Bewegungsgeschwindigkeit abnimmt. Die Sollgeschwindigkeit nimmt zu, wenn die Bewegungsgeschwindigkeit größer als die Sollgeschwindigkeit und deshalb das vom Regelverstärker 9 erzeugte Beschleunigungssignal positiv ist. Dadurch wird das Werkzeug beschleunigt. Erst wenn die Bewegungsgeschwindigkeit kleiner als die Sollgeschwindigkeit ist, nimmt das vom Regelverstärker 9 aus der Differenz von Bewegungsgeschwindigkeit und Sollgeschwindigkeit ermittelte Beschleunigungssignal einen negativen Wert an, und das Werkzeug wird ruckfrei bis zum Stillstand in der Endposition abgebremst. Da sich hierbei der Bremsvorgang direkt an den Beschleunigungsvorgang anschließt, wird das Werkzeug in sehr kurzer Zeit von der Ausgangs- zur Endposition bewegt.

Soll das Formteil von der Endposition wieder zur Ausgangsposition zurückbewegt werden, wird dem nichtinvertierenden Eingang 2 des Operationsverstärkers 1 ein Nullpotential zugeführt. Die Sollposition hat einen positiven Wert und wird von diesem Nullpotential subtrahiert, so daß die Differenz aus Bewegungshub und Sollposition, die Bewegungsgeschwindigkeit, die Beschleunigung und die Sollgeschwindigkeit negative Werte haben. Dadurch nimmt die Sollposition ab, und das Werkzeug bewegt sich ruckfrei zur Ausgangsposition zurück.

Die invertierenden Eingänge des Differenzverstärkers 12 zur Begrenzung positiver Beschleunigungssignale und des Differenzverstärkers 13 zur Begrenzung negativer Beschleunigungssignale sind einerseits mit der Verbindungsleitung zwischen dem Regelverstärker 9 und dem Integrierglied 10 und andererseits über je eine in Durchlaßrichtung bzw. in Sperrichtung liegende Rückkopplungsdiode 14 bzw. 15 mit dem Ausgang des Differenzverstärkers 12 bzw. 13 elektrisch verbunden. Bei positiven Beschleunigungssignalen ist die Rückkopplungsdiode 14 und bei negativen Beschleunigungssignalen die Rückkopplungsdiode 15 leitend, so daß über die Eingänge 12b bzw. 13b der Differenzverstärker 12 bzw. 13 die positiven bzw. negativen Werte eingebbar sind, durch die das positive bzw. negative Beschleunigungssignal begrenzt wird.

Die Sollgeschwindigkeit wird dem invertierenden Eingang 16a eines als Operationsverstärker 16 ausgebildeten Geschwindigkeitsbegrenzers zugeführt, der über zwei Umschalter 17 und 18 und vier Schaltdioden 19 bis 22 mit der Verbindungsleitung zwischen dem Regelverstärker 9 und dem Integrierglied 10 elektrisch verbunden ist.

Dem nichtinvertierenden Eingang 16b des Operationsverstärkers 16 wird bei der in der Figur eingezeichneten Stellung des Umschalters 23 ein der Maximalgeschwindigkeit des Werkzeuges in Richtung von der Ausgangs- zur Endposition entsprechendes Signal und bei der gestrichelt eingezeichneten Stellung des Schalters 23 ein vom Inverter 24 umpolarisiertes und somit der Maximalgeschwindigkeit in der entgegengesetzten Richtung entsprechendes Signal zugeführt.

Bei der Bewegungsrichtung des Werkzeuges von der Ausgangszur Endposition haben die Umschalter 17, 18 und 23 die in der Figur eingezeichnete Stellung. Solange die Maximalgeschwindigkeit größer als die Sollgeschwindigkeit ist, steuert der Operationsverstärker 16 die Schaltdiode 19 über den Umschalter 17 mit einer positiven Spannung an, so daß die Schaltdiode 19 sperrt und damit das Beschleunigungssignal nur von den Elementen zur Begrenzung des Beschleunigungssignales 12 bis 15 begrenzbar ist.

Erreicht die Sollgeschwindigkeit den Wert der Maximalgeschwindigkeit, wird die Ausgangsspannung des Operationsverstärkers 16 zu Null, und die Schaltdiode 19 wird in den leitenden Zustand geschaltet. Über die Schaltdiode 20 und den Umschalter 18 liegt dann auch der Eingang des Integriergliedes 10 auf Nullpotential, so daß die Sollgeschwindigkeit den erreichten Wert beibehält.

Erst, wenn das vom Rechenglied 4 dem Eingang 9b des Regelverstärkers 9 zugeführte Signal den Wert des Sollgeschwindigkeitssignales unterschreitet, wird das Integrierglied 10 mit einem negativen Beschleunigungssignal angesteuert, der Wert der Sollgeschwindigkeit nimmt ab, die Ausgangsspannung des Operationsverstärkers 16 nimmt wieder positive Polarität an, und die Schaltdiode 19 sperrt wieder. Die negative Polarität des Beschleunigungssignales bewirkt außerdem, daß auch die Schaltdiode 20 sperrt, so daß das Beschleunigungssignal weder von den Elementen zur Begrenzung der Beschleunigung 12 bis 15 noch vom alls Operationsverstärker 16 ausgebildeten Geschwindigkeitsbegrenzer begrenzbar ist.

Wird das Werkzeug von der End- zur Ausgangsposition zurückbewegt, weisen die der Bewegungsgeschwindigkeit, der Sollgeschwindigkeit und der Beschleunigung entsprechenden Signale eine negative Polarität auf. Außerdem werden bei der Umkehr der Werkzeugbewegung die Umschalter 17, 18 und 23 auf die gestrichelt eingezeichnete Position umgeschaltet, so daß der Operationsverstärker 16 über die Dioden 21 und 22 mit der Verbindungsleitung zwischen dem Regelverstärker 9 und dem Integrierglied 10 elektrisch verbunden ist.

Die Ausgangsspannung des Operationsverstärkers 16 ist so lange negativ und sperrt die Schaltdiode 22, bis der Betrag des negativen Sollgeschwindigkeitssignales den Betrag des der Maximalgeschwindigkeit entsprechenden Signales erreicht. Das Ausgangssignal des Operationsverstärkers 16 wird dann zu Null und schaltet die Schaltdiode 22 in den leitenden Zustand, so daß auch das negative Beschleunigungssignal auf einen Nullwert begrenzt wird und die Sollgeschwindigkeit ihren Wert beibehält.

Erst, wenn der Betrag des negativen Ausgangssignales des Rechengliedes 4 den Wert des ebenfalls negativen Sollgeschwindigkeitssignales unterschreitet, wird das Integrierglied 10 vom Regelverstärker 9 mit einem positiven Beschleunigungssignal angesteuert. Das Integrierglied 10 integriert aufwärts, d. h. der Betrag des negativen Sollgeschwindigkeitssignales nimmt ab. Unterschreitet der Pegel des Sollgeschwindigkeitssignales betragsmäßig den Pegel des negativen, der Maximalgeschwindigkeit entsprechenden Signales, nimmt das Ausgangssignal des Operationsverstärkers 16 wieder eine negative Polarität an und sperrt die Schaltdiode 22. Die Schaltdiode 21 wird von dem positiven Beschleunigungssignal gesperrt, das nun weder von den Elementen zur Begrenzung der Beschleunigung 12 bis 15 noch vom Geschwindigkeitsbegrenzer 16 beeinflußbar ist.

## Patentansprüche

1. Einrichtung zur Steuerung eines Antriebes für die Bewegung von Werkzeugen, insbesondere von Formteilen einer Kunststoff-Spritzgußmaschine, mit einem einen Positionswert liefernden, die Werkzeugbewegung wegabhängig erfassenden Istwegaufnehmer (8) mit einer Sollwegvorgabe (1), durch die zunächst die gesamte, dem Bewegungshub des Werkzeuges entsprechende Wegstrecke vorgegeben wird und einem Rechenglied (4), das abhängig von dem in der Sollwegvorgabe (1) erzeugten Signal einen der maximalen Bewegungsgeschwindigkeit entsprechenden Wert erzeugt, aus dem bei Bewegung des Werkzeuges ein Nachsteuersignal für die Sollwegvorgabe (1) und aus dem die Stellgröße für den Antrieb (25) abgeleitet wird, dadurch gekennzeichnet, daß zusätzlich eine vorgebbare Verzögerung zur Erreichung des Stillstandes des Werkzeuges bei einer Endposition dem Rechenglied (4) zugeführt wird, dessen Ausgangssignal an einen Geschwindigkeitsregelkreis (9, 10, 11) geliefert wird, der eine Reihenschaltung aus einem vom Rechenglied (4) angesteuerten Regelverstärker (9) und einem Integrierglied (10) aufweist, das einerseits über eine Rückkopplungsschleife (11) an den Regelverstärker (9) und andererseits an einen eine Sollposition ermittelnden Integrator (6) ein Sollgeschwindigkeitssignal liefert, daß die Stellgröße aus dem Vergleich zwischen Positionswert und Sollposition bestimmt wird und daß ein mit der Rückkopplungsschleife (11) gekoppelter Geschwindigkeitsbegrenzer (16), der ein vom Regelverstärker (9) dem Integrierglied (10) geliefertes Beschleunigungssignal auf Null setzt, wenn die Sollgeschwindigkeit eine dem Geschwindigkeitsbegrenzer (16) vorgebbare Maximalgeschwindigkeit erreicht.

2. Einrichtung nach Anspruch 1, dadurch gekennzeichnet, daß das in der Sollwegvorgabe (1) erzeugte Signal durch Vergleich der Sollposition mit dem dem Bewegungshub entsprechenden Wert ermittelt wird.

3. Einrichtung nach Anspruch 1 oder 2, dadurch gekennzeichnet, daß der Geschwindigkeitsbegrenzer als Operationsverstärker (16) ausgebildet ist, der die Maximalgeschwindigkeit mit der Sollgeschwindigkeit vergleicht.

4. Einrichtung nach einem der vorhergehenden Ansprüche, dadurch gekennzeichnet, daß mindestens ein Element zur Begrenzung des Beschleunigungssignals auf einen vorgebbaren Pegel, bestehend aus einem Differenzverstärker (12 bzw. 13) dessen invertierender Eingang einerseits über eine Rückkopplungsdiode (14 bzw. 15) mit dem Differenzverstärkerausgang und andererseits mit dem Eingang des Integriergliedes (10) verbunden ist und dessen nichtinvertierender Eingang (12b bzw. 13b) von einem dem vorgebbaren Pegel des Beschleunigungssignales entsprechenden Signal angesteuert wird.

**Claims**

1. An arrangement for controlling a drive for the movement of tools, more particularly of mould parts of a machine for injection-moulding a synthetic material comprising an actual path pick-up device (8) supplying a position value, recording the movement of the tool in a path-dependent manner and having means (1) for preadjusting the nominal path, by which first the whole path length corresponding to the movement sweep of the tool is preadjusted and a calculation member (4), which in dependence upon the signal produced in the means for preadjusting the nominal path produces a value corresponding to the maximum speed of movement, from which upon movement of the tool an aftercontrol signal for the means (1) for preadjusting the nominal path and the adjustment value for the drive (25) are derived, characterized in that in addition a preadjustable delay for attaining the stationary state of the tool in a final position is supplied to the calculation member (4), whose output signal is supplied to a speed control circuit (9, 10, 11), which comprises a series-combination of a control amplifier (9) driven by the calculation member (4) and an integration member (10), which supplies a nominal speed signal on the one hand through a feedback loop (11) to the control amplifier (9) and on the other hand to an integrator (6) determining a nominal position, in that the adjustment value is determined from the comparison between the position value and the nominal position, and in that a speed limiter (16) coupled to the feedback loop (11) is provided, which sets to zero an acceleration signal supplied by the control amplifier (9) to the integration member (10) when the nominal speed reaches a maximum speed preadjustable by the speed limiter (16).

2. An arrangement as claimed in Claim 1, characterized in that the signal produced in the means (1) for preadjusting the nominal path is determined by comparison of the nominal position with the value corresponding to the movement sweep.

3. An arrangement as claimed in Claim 1 or 2, characterized in that the speed limiter is constructed as an operational amplifier (16), which compares the maximum speed with the nominal speed.

4. An arrangement as claimed in any one of the preceding Claims, characterized in that at least one element for limiting the acceleration signal to a preadjustable level is provided, which comprises a differential amplifier (12 and 13, respectively), whose inverting input is connected on the one hand through a feedback diode (14 and 15, respectively) to the differential amplifier output and on the other hand to the input of the integration member (10) and whose non-inverting input (12b and 13b, respectively) is driven by a signal corresponding to the preadjustable level of the acceleration signal.

**Revendications**

1. Dispositif de conduite d'un mécanisme de commande de mouvement d'outils, en particulier de parties de moule d'une machine à mouler par injection pour matières plastiques, comportant un capteur de déplacement effectif (8) détectant le mouvement de l'outil en fonction du déplacement et fournissant une valeur de position, un dispositif de sélection de déplacement de consigne (1), par lequel la distance totale correspondant à la course de mouvement de l'outil est initialement prédéfinie et un élément de calcul (4) qui, en fonction du signal produit dans le dispositif de sélection de déplacement de consigne (1), produit une valeur correspondant à la vitesse de mouvement maximale à partir de laquelle, lorsque l'outil se meut, est dérivé un signal d'asservissement pour le dispositif de sélection de déplacement de consigne (1) et à partir de laquelle est dérivée la variable de réglage pour le mécanisme de commande (25), caractérisé en ce qu'en supplément, un délai pouvant être prédéfini pour atteindre l'immobilisation complète de l'outil, dans une position finale, est introduit dans l'élément de calcul (4) dont le signal de sortie est fourni à un circuit régulateur de vitesse (9, 10 11) qui comprend un montage en série d'un amplificateur de régulation (9) excité par l'élément de calcul (4) et un élément intégrateur (10) qui fournit un signal de vitesse de consigne d'une part, par l'intermédiaire d'une boucle de rétroaction (11) à l'amplificateur de régulation (9) et d'autre part, à un intégrateur (6) déterminant une position de consigne, que la variable de réglage est déterminée à partir de la comparaison entre la valeur de position et la position de consigne et qu'un limiteur de vitesse (16) est couplé à la boucle de rétroaction (16) et met à zéro un signal d'accélération fourni à l'élément intégrateur (10) par l'amplificateur de régulation (9) lorsque la vitesse de consigne atteint une vitesse maximale pouvant être prédéfinie par le limiteur de vitesse (16).

2. Dispositif suivant la revendication 1, caractérisé en ce que le signal produit dans le dispositif de sélection de déplacement de consigne (1) est déterminé par comparaison de la position de consigne avec la valeur correspondant à la course de mouvement.

3. Dispositif suivant la revendication 1 ou 2, caractérisé en ce que le limiteur de vitesse a la forme d'un amplificateur opérationnel (16) qui compare la vitesse maximale à la vitesse de consigne.

4. Dispositif suivant l'une quelconque des revendications précédentes, caractérisé en ce qu'au moins un élément est prévu pour limiter le signal d'accélération à un niveau pouvant être prédéfini et est formé d'un amplificateur différenciateur (12 ou 13) dont l'entrée inverseuse est connectée, d'une part, par l'intermédiaire d'une diode de rétroaction (14 ou 15) à la sortie de l'amplificateur différenciateur et, d'autre part, à l'entrée de l'élément intégrateur (10) et dont l'entrée non inverseuse (12b ou 13b) est activée par un signal correspondant au niveau pouvant être prédéfini du signal d'accélération.